# EUROPÄISCHE PATENTSCHRIFT

(11) **EP 0 311 062 B1**
(45) Veröffentlichungstag und Bekanntmachung des Hinweises auf die Patenterteilung: **05.01.1994**
(21) Anmeldenummer: 88116516.1
(22) Anmeldetag: 06.10.1988
(51) Int. Cl.: B60R 21/00, G05B 19/10

(54) **Sensor für Kraftfahrzeuge**
Sensor for motor vehicles
Détecteur pour véhicules automobiles

(30) Priorität: 07.10.1987 DE 3733832
(43) Veröffentlichungstag der Anmeldung: 12.04.1989
(73) Patentinhaber: TEMIC TELEFUNKEN microelectronic GmbH, 74072 Heilbronn (DE)
(72) Erfinder: Spies, Hans, D-8891 Pfaffenhofen (DE); Laucht, Horst, Dr., D-8206 Bruckmühl (DE); Wöhrl, Alfons, D-8898 Schrobenhausen (DE)
(74) Vertreter: Maute, Hans-Jürgen, Dipl.-Ing.

(56) Entgegenhaltungen:
- EP-A- 0 027 747
- EP-A- 0 098 915
- WO-A-87/06975
- DE-A- 3 001 780
- DE-A- 3 608 525
- DE-C- 3 603 524
- DE-U- 8 711 529
- FR-A- 2 489 017
- GB-A- 2 156 905
- GB-A- 2 188 452

## Beschreibung

Die Erfindung bezieht sich auf einen Sensor gemäß dem Oberbegriff des Anspruchs 1.

Solche Sensoren sind in verschiedenen Ausführungsformen, insbesondere mit piezoelektrischem Wandler, bekannt geworden.

Aus der DE 30 01 780 A1 ist eine Steueranordnung für Sicherheitseinrichtungen, wie aufblasbare Luftkissen oder Gurtstrammer, in Fahrzeugen bekannt, in der ein elektromechanischer Beschleunigungswandler Ausgangssignale abgibt, die für die Auslösung einzelner Sicherheitseinrichtungen verarbeitet werden, insbesondere auch zur Anwendung für verschiedene Fahrzeugtypen.

Bei allen bisherigen Entwicklungen derartiger Sensoren ist immer angestrebt worden, einen einzigen Sensor für alle Kraftfahrzeugtypen bereitzustellen, um nicht nur eine verbilligte Produktion zu erhalten, sondern auch eine rationale Lagerhaltung und einheitliche Montage mit gleichbleibenden Montagezeiten zu ermöglichen. Eine Spezifizierung derartiger Sensoren auf unterschiedliche Kraftfahrzeugtypen erfolgt bei der Steueranordnung gemäß der oben genannten DE 30 01 780 A1 durch Programmierung des Festwertspeichers einer programmgesteuerten Recheneinrichtung.

Solche Spezifizierungen sind dann notwendig, wenn die Kraftfahrzeugtypen in ihren aktiven Sicherheitseinrichtungen unterschiedlich gestaltet sind, wie z.B. in der Ausgestaltung der Knautschzonen etc. Die bisherigen Sensoren werden aus diesen Gründen üblicherweise an starren Rahmenteilen des Kraftfahrzeugs befestigt, womit Karosserieunterschiede und Unterschiede in den aktiven Sicherheitseinrichtungen annähernd ausgeglichen werden können. Allerdings treten nicht unerhebliche Probleme dann auf, wenn ein seitlicher Aufprall des Kraftfahrzeuges erfolgt, oder wenn der Sensor beispielsweise in das Lenkrad eingebaut werden soll.

Der vorliegenden Erfindung liegt die Aufgabe zugrunde, die bisherigen Nachteile des Standes der Technik zu beseitigen und einen Sensor der eingangs genannten Art zu schaffen, der sich selbst problemlos an den jeweiligen Kraftfahrzeugtyp anpaßt.

Diese Aufgabe wird durch die in den Ansprüchen 1 oder 2 aufgeführten Maßnahmen gelöst. In der nachfolgenden Beschreibung ist jeweils ein Ausführungsbeispiel beschrieben.

Der vorgeschlagene Sensor wird konstruktiv wie bisher gleich ausgeführt. In der Rechner- und Auswerteinheit des Sensors - meistens ein Mikroprozessor - ist ein sogenanntes Software-Programm integriert, das die für Jeden Kraftfahrzeugtyp spezifischen kritischen Parameter enthält. Solche Parameter sind z.B. die Ansprechempfindlichkeit des Sensors in Abhängigkeit des Aufprallwinkels, Schwellwerte für die kritische Beschleunigung, die kritische Geschwindigkeit oder den kritischen Weg, ferner die Grenzfrequenzen oder Grenzamplituden. Alle diese Charakteristiken bzw. Parameter werden für eine Vielzahl von Kraftfahrzeugtypen in einem Programm zusammengefaßt und im Sensor gespeichert. Zu erwähnen ist noch, daß beispielsweise eine Einstellung der beiden letztgenannten Parameter - also Grenzfrequenzen und Grenzamplituden - eine Auslösung der Sicherheiteinrichtung etwa dann verhindern, wenn in der Reparaturwerkstatt beispielsweise aus Versehen auf den Beschleunigungssensor mit einem Hammer geschlagen wird, oder das Kraftfahrzeug mit hoher Geschwindigkeit über einen Bordstein oder ein Schlagloch fährt.

Die für eine bestimmte Kraftfahrzeugtype spezifische oder signifikante Auswahl kann beim Einbau des Sensors in das Kraftfahrzeug gewissermaßen "selbstlernend" erfolgen.

In einer Ausführungsform des Sensors ist diesem beispielsweise ein Akustiksensor (Mikrofon) zugeordnet, welcher beim Start des Motors den Jeweiligen Kraftfahrzeugtyp, in den der Sensor eingebaut wird bzw. ist, am Geräusch erkennt und dementsprechend den für diese Type zuständigen Parametersatz automatisch auswählt und den Sensor einstellt.

Eine Erkennung und Einstellung kann auch erfolgen indem der im Sensor enthaltene piezoelektrische Beschleunigungsfühler die Vibrationscharakteristik des Kraftfahrzeugtyps aufnimmt und diese zur Auswahl des Parametersatzes heranzieht.

Durch diese vorgeschlagenen Maßnahmen ist nun eine Hard- und Softwarekonfiguration eines Sensors entwickelt worden, die es ermöglicht, typspezifische Verarbeitungsmoden zu realisieren und damit zum einen die Auslösesicherheit zu erhöhen und zum andern eine einheitliche Sensortype für alle Kraftfahrzeugkonzeptionen zu schaffen.

## Patentansprüche

1. Sensor für eine passive Sicherheitseinrichtung, insbesondere Luftkissen oder Gurtstrammer in Kraftfahrzeugen mit einer Auswerteschaltung, die das an sie angelegte elektrische Ausgangssignal eines Beschleunigungsfühlers/piezoelektrischen Wandlers mit Hilfe eines Software-Programms auswertet und beim Erreichen kritischer, für Jeden Kraftfahrzeugtyp spezifischer Parameter Auslösesignale an die Sicherheitseinrichtung abgibt, wobei die Auswerteschaltung eine Speichereinheit umfaßt, in der das Software-Programm integriert ist, **dadurch gekennzeichnet,** daß das Software-Programm Charakteristiken und Parameter einer Vielzahl von Kraftfahrzeugen umfaßt, und daß die für eine bestimmte Kraftfahrzeugtype spezifische oder signifikante Parameterauswahl mittels eines der Sicherheitsanordnung zugeordneten Akustiksensors erfolgt, welcher beim Start des Motors des Kraftfahrzeugs den jeweiligen Kraftfahrzeugtyp am Geräusch erkennt und entsprechend den zugehörigen Parametersatz aus wählt und den Sensor einstellt.

2. Sensor für eine passive Sicherheitseinrichtung, insbesondere Luftkissen oder Gurtstrammer in Kraftfahrzeugen mit einer Auswerteschaltung, die das an sie angelegte elektrische Ausgangssignal eines Beschleunigungsfühlers/piezoelektrischen Wandlers mit Hilfe eines Software-Programms auswertet und beim Erreichen kritischer, für jeden Kraftfahrzeugtyp spezifischer Parameter Auslösesignale an die Sicherheitseinrichtung abgibt, wobei die Auswerteschaltung eine Speichereinheit umfaßt, in der das Software-Programm integriert ist, **dadurch gekennzeichnet,** daß das Software-Programm Charakteristiken und Parameter einer Vielzahl von Kraftfahrzeugen umfaßt, und daß die für eine bestimmte Kraftfahrzeugtype spezifische oder signifikante Parameterauswahl mittels des Beschleunigungsfühlers/piezoelektrischen Wandlers erfolgt, welcher die Vibrationscharakteristik des Kraftfahrzeugs aufnimmt und zur Auswahl des Parametersatzes heranzieht.

## Claims

1. Sensor for a passive safety device, in particular an air cushion or belt tightener in motor vehicles, comprising an evaluation circuit which evaluates a thereto applied electrical output signal of an acceleration sensor/piezoelectrical converter by means of a software programme and, on reaching critical vehicle-type specific parameters, feeds trigger signals to the safety device, in which respect the evaluation circuit includes a memory into which the software programme is integrated, **characterised in that** the software programme covers characteristics and parameters of a plurality of motor vehicles, and the selection of parameters which are specific or significant for a specified type of motor vehicle is carried out by means of an acoustic sensor, which is associated with the safety arrangement and which on starting the motor of the motor vehicle recognizes the respective vehicle type by sound, and accordingly selects the associated set of parameters and sets the sensor.

2. Sensor for a passive safety device, in particular an air cushion and belt tightener in motor vehicles, comprising an evaluation circuit which evaluates a thereto applied electrical output signal of an acceleration sensor/piezoelectrical converter by means of a software programme and, on reaching critical vehicle-type specific parameters, feeds trigger signals to the safety device, in which respect the evaluation circuit includes a memory into which the software programme is integrated, **characterised in that** the software programme covers characteristics and parameters of a plurality of motor vehicles, and the selection of parameters which are specific or significant for a specified type of motor vehicle is carried out by means of an acceleration sensor/piezoelectrical converter, which picks up the vibration characteristics of the motor vehicle and is used to select a set of parameters.

## Revendications

1. Détecteur destiné à un dispositif de sécurité passif, en particulier un sac gonflable ou un système de tension de ceinture dans des véhicules automobiles, comportant un circuit de traitement qui, au moyen d'un programme logiciel, exploite le signal électrique de sortie qui lui est appliqué d'un capteur d'accélération/convertisseur piézoélectrique et, lorsqu'un paramètre critique, spécifique à chaque type de véhicule est atteint, délivre des signaux de déclenchement au dispositif de sécurité, le circuit de traitement comprenant une unité de mémoire dans laquelle le programme logiciel est intégré, caractérisé par le fait que le programme logiciel contient des caractéristiques et des paramètres d'une pluralité de types de véhicules et par le fait que la sélection des paramètres significatifs et spécifiques à un type donné de véhicule est opérée au moyen d'un capteur acoustique associé au dispositif de sécurité, lequel capteur, lors du démarrage du moteur du véhicule, reconnaît le type dudit véhicule à partir du bruit, sélectionne le jeu de paramètres correspondant et met le détecteur en service.

2. Détecteur destiné à un dispositif de sécurité passif, en particulier un sac gonflable ou un système de tension de ceinture dans des véhicules automobiles, comportant un circuit de traitement qui, au moyen d'un programme logiciel, exploite le signal électrique de sortie qui lui est appliqué d'un capteur d'accélération/convertisseur piézoélectrique et, lorsqu'un paramètre critique, spécifique à chaque type de véhicule est atteint, délivre des signaux de déclenchement au dispositif de sécurité, le circuit de traitement comprenant une unité de mémoire dans laquelle le programme logiciel est intégré, caractérisé par le fait que le programme logiciel contient des caractéristiques et des paramètres d'une pluralité de types de véhicules et par le fait que la sélection des paramètres significatifs et spécifiques à un type donné de véhicule est opérée au moyen du capteur d'accélération/convertisseur piézo-électrique qui enregistre la caractéristique vibratoire du véhicule et l'utilise pour la sélection du jeu de paramètres.
